# EUROPEAN PATENT APPLICATION

(11) **EP 4 400 399 A1**
(43) Date of publication of application: **17.07.2024**
(21) Application number: 23216456.6
(22) Date of filing: 13.12.2023
(51) Int. Cl.: B62K 25/08, F16F 9/02, F16F 9/32

(54) **AIR SPRING ASSEMBLY**

(30) Priority: 13.12.2022 US 202263432324 P; 13.12.2022 US 202263432338 P; 12.12.2023 US 202318537635
(71) Applicant: Fox Factory, Inc., Duluth, GA 30097 (US)
(72) Inventor: Brown, William O., GA, 30097 (US); Allinger, Wesley E., GA, 30097 (US); Shaffer, Samuel, GA, 30097 (US)
(74) Representative: Greaves Brewster LLP

(57) **Abstract**

A piston assembly (300) comprising:
a piston (305);
at least one first compliant member (315);
a seal (302) configured to provide an air tight seal between said piston (305) and a wall of an air chamber; and
a fastener (325) configured to couple said piston (305) with a shaft (110).

## Description

### CROSS-REFERENCE TO RELATED APPLICATION (PROVISIONAL)

This application claims priority from U.S. Provisional Patent Application No. 63/432,324 filed on December 13, 2022, from U.S. Provisional Patent Application No. 63/432,338 filed on December 13, 2022, and from U.S. Patent Application No. 18/537,635 filed on December 12, 2023.

### TECHNICAL FIELD

Embodiments of the invention generally relate to an air spring assembly. Some embodiments relate to a piston assembly, to a suspension inclusive device including the piston assembly, and to a vehicle comprising the piston assembly. Some embodiments relate to a negative plate assembly, to a suspension inclusive device including the negative plate assembly, and to a vehicle comprising the negative plate assembly. Some embodiments relate to an air spring assembly, to a suspension inclusive device including the air spring assembly, and to a vehicle comprising the air spring assembly.

### BACKGROUND

Present configurations of an air spring assembly include an air chamber that is rigidly attached to (or located within, formed as a part of, etc.) a sprung portion of a component. Within the air chamber is a piston that seals on an inside diameter (ID) of the air chamber wall. The piston is rigidly attached to a shaft that extends through a seal head at the bottom of the air chamber and is rigidly attached, at its base, to an unsprung portion of a component. Thus, the common configuration results in the shaft being constrained at three points along its length (the piston, the seal head, and the base lug).

Often, the air spring assembly is installed within a confined space, e.g., within a fork, framework, or the like. Using a fork as an example, when a load is applied to the fork (e.g., on the fork axle -from riding the fork) it can cause a deflection of the fork. As the fork deflects, the shaft must follow the deflection which will put a high normal force on the two dynamic bearing surfaces: one at the seal head and one at the piston. Deleteriously, the high normal force results in high friction forces at the seal head and the piston which will add a resistance to the telescopic motion of the air spring assembly and, in so doing, reduce the suspension performance.

### SUMMARY

According to some embodiments there is provided a piston assembly. The piston assembly may comprise a piston. The piston assembly may comprise at least one compliant member. The piston assembly may comprise a seal configured to provide an air tight seal between said piston and a wall of an air chamber. The piston assembly may comprise a fastener configured to couple said piston with a shaft.

The piston assembly may be suitable for use in an air spring assembly in a suspension inclusive device. Examples of a suspension inclusive device include, but are not limited to, a suspension for a vehicle, an exoskeleton, a seat frame, a prosthetic, a suspended floor, a hood and/or trunk support for a vehicle, a door closer. In some embodiments when the piston assembly is incorporated into a suspension for a vehicle, the vehicle may be, but not limited to, a bicycle, an electric bike (e-bike), a hybrid bike, a scooter, a motorcycle, an automobile, ATV, UTV, snowmobile, power boat, a personal watercraft.

In some embodiments the piston comprises an extended body length to increase an overlap of said shaft.

In some embodiments said piston comprises aluminum.

In some embodiments said seal comprises a quad seal (also known as a quad ring, x-ring or four-lobed seal).

In some embodiments said at least one compliant member comprises a glide band located around an outer diameter of said piston.

In some embodiments said glide band comprises at least one groove. The at least one groove may be configured to allow airflow around said glide band.

In some embodiments said glide band comprises a split. The split may be configured for use in an installation of said glide band around said outer diameter of said piston.

In some embodiments a height of said glide band is configured to inhibit, and in some embodiments prevent, said piston from rocking within said air chamber.

In some embodiments said glide band comprises Polytetrafluoroethylene (PTFE).

According to some embodiments there is provided an air spring assembly comprising a piston assembly as set out above, or as described or as claimed anywhere herein.

According to some embodiments there is provided a suspension inclusive device comprising a piston assembly as set out above, or as described or as claimed anywhere herein. Examples of a suspension inclusive device include, but are not limited to, a suspension for a vehicle, an exoskeleton, a seat frame, a prosthetic, a suspended floor, a hood and/or trunk support for a vehicle, a door closer. In some embodiments when the piston assembly is incorporated into a suspension for a vehicle, the vehicle may be, but not limited to, a bicycle, an electric bike (e-bike), a hybrid bike, a scooter, a motorcycle, an automobile, ATV, UTV, snowmobile, power boat, a personal watercraft.

In some embodiments the suspension inclusive device comprises a suspension for a vehicle. The suspension may comprise an air spring assembly comprising the piston assembly, and a damper.

According to some embodiments there is provided a vehicle comprising a suspension as set out above, or as described or as claimed anywhere herein. The vehicle may be an electric bike (e-bike), a hybrid bike, a scooter, a motorcycle, an automobile, ATV, UTV, snowmobile, power boat, or a personal watercraft.

According to some embodiments there is provided a piston assembly. The piston assembly may comprise a piston. The piston assembly may comprise at least one compliant member between said piston and a shaft. The piston assembly may comprise a piston base. The piston base may be configured to couple with said piston and supportively enclose said shaft and said at least one compliant member therein, such that said shaft can move relative to said piston.

The piston assembly may be suitable for use in an air spring assembly in a suspension inclusive device. Examples of a suspension inclusive device include, but are not limited to, a shock for a vehicle, an exoskeleton, a seat frame, a prosthetic, a suspended floor, a hood and/or trunk support for a vehicle, a door closer. In some embodiments when the piston assembly is incorporated into a shock for a vehicle, the vehicle may be, but not limited to, a bicycle, an electric bike (e-bike), a hybrid bike, a scooter, a motorcycle, an automobile, ATV, UTV, snowmobile, power boat, a personal watercraft.

In some embodiments the piston assembly further comprises a shaft flange coupled with a shaft. The at least one compliant member may be between said piston and said shaft flange. The piston assembly may comprise at least a second compliant member between said piston and said shaft flange. The piston base may be configured to couple with said piston and supportively enclose said shaft flange and both of said compliant members therein, such that said shaft can move relative to said piston.

In some embodiments a diameter of said shaft flange may be smaller than a bore in said piston. The shaft flange may be configured to move radially and tilt within said piston bore.

In some embodiments the piston assembly may further comprise a seal configured to provide an air tight seal between said piston and a wall of an air chamber.

In some embodiments the piston assembly may further comprise a glide band located around an outer diameter of said piston. A height of said glide band may be configured to inhibit, and in some embodiments prevent, said piston from rocking within an air chamber.

In some embodiments the piston assembly may further comprise a top out assembly fixedly coupled with said shaft. The top out assembly may be configured to provide a top out load path that does not include said at least one compliant member.

In some embodiments said at least one compliant member may comprise, or may be, a spring.

In some embodiments said at least one compliant member may comprise, or may be, an elastomer.

According to some embodiments there is provided an air spring assembly comprising a piston assembly as set out above, or as described or as claimed anywhere herein.

According to some embodiments there is provided a suspension inclusive device comprising a piston assembly as set out above, or as described or as claimed anywhere herein. Examples of a suspension inclusive device include, but are not limited to, a suspension for a vehicle, an exoskeleton, a seat frame, a prosthetic, a suspended floor, a hood and/or trunk support for a vehicle, a door closer. In some embodiments when the piston assembly is incorporated into a suspension for a vehicle, the vehicle may be, but not limited to, a bicycle, an electric bike (e-bike), a hybrid bike, a scooter, a motorcycle, an automobile, ATV, UTV, snowmobile, power boat, a personal watercraft.

In some embodiments the suspension inclusive device comprises a suspension for a vehicle. The suspension may comprise an air spring assembly comprising the piston assembly, and a damper.

According to some embodiments there is provided a vehicle comprising a suspension as set out above, or as described or as claimed anywhere herein. The vehicle may be an electric bike (e-bike), a hybrid bike, a scooter, a motorcycle, an automobile, ATV, UTV, snowmobile, power boat, or a personal watercraft.

According to some embodiments there is provided a negative plate assembly. The negative plate assembly may comprise an outer seal head. The negative plate assembly may comprise an inner seal head configured to couple with said outer seal head to form a body of said negative plate assembly. The negative plate assembly may comprise a compliant member between said outer seal head and said inner seal head configured to provide a flexible, air tight connection with said inner seal head and said outer seal head. The inner seal head may further comprise a bearing housing. The bearing housing may be radially and rotationally moveable within said body of said negative plate assembly due to said flexible, air tight connection provided by said compliant member.

The negative plate assembly may be suitable for use in an air spring assembly in a suspension inclusive device. Examples of a suspension inclusive device include, but are not limited to, a shock for a vehicle, an exoskeleton, a seat frame, a prosthetic, a suspended floor, a hood and/or trunk support for a vehicle, a door closer. In some embodiments when the negative plate assembly is incorporated into a shock for a vehicle, the vehicle may be, but not limited to, a bicycle, an electric bike (e-bike), a hybrid bike, a scooter, a motorcycle, an automobile, ATV, UTV, snowmobile, power boat, a personal watercraft.

In some embodiments the bearing housing may comprise a scraper seal. The bearing housing may comprise a shaft bushing. The bearing housing may comprise a shaft seal.

In some embodiments the negative plate assembly may further comprise a seal configured to provide an air tight fitment between said outer seal head and a wall of an air chamber.

In some embodiments the negative plate assembly may further comprise a retaining ring configured to fit within a retaining ring groove of said outer seal head and hold said negative plate assembly together. The negative plate assembly may comprise a cover plate to cover said retaining ring.

In some embodiments said compliant member may comprise a large diameter O-ring.

In some embodiments said compliant member may comprise, or may be, an elastomer.

In some embodiments said shaft bushing and scraper seal may be configured to translate for a shaft deflection to reduce a normal force applied due to a change in an axial angle of said shaft.

According to some embodiments there is provided an air spring assembly comprising a negative plate assembly as set out above, or as described or as claimed anywhere herein.

According to some embodiments there is provided a suspension inclusive device comprising a negative plate assembly as set out above, or as described or as claimed anywhere herein. Examples of a suspension inclusive device include, but are not limited to, a suspension for a vehicle, an exoskeleton, a seat frame, a prosthetic, a suspended floor, a hood and/or trunk support for a vehicle, a door closer. In some embodiments when the negative plate assembly is incorporated into a suspension for a vehicle, the vehicle may be, but not limited to, a bicycle, an electric bike (e-bike), a hybrid bike, a scooter, a motorcycle, an automobile, ATV, UTV, snowmobile, power boat, a personal watercraft.

In some embodiments the suspension inclusive device comprises a suspension for a vehicle. The suspension may comprise an air spring assembly comprising the negative plate assembly, and a damper.

According to some embodiments there is provided a vehicle comprising a suspension as set out above, or as described or as claimed anywhere herein. The vehicle may be an electric bike (e-bike), a hybrid bike, a scooter, a motorcycle, an automobile, ATV, UTV, snowmobile, power boat, or a personal watercraft.

According to some embodiments, there is provided an air spring assembly. The air spring assembly may comprise a piston assembly. The piston assembly may comprise a piston. The piston assembly may comprise at least one piston side compliant member between said piston and a shaft. The piston assembly may comprise a piston base. The piston base may be configured to couple with said piston and supportively enclose said shaft and said at least one piston side compliant member therein, such that said shaft can move relative to said piston. The air spring assembly may comprise a negative plate assembly. The negative plate assembly may comprise an outer seal head. The negative plate assembly may comprise an inner seal head. The inner seal head may be configured to couple with said outer seal head to form a body of said negative plate assembly. The negative plate assembly may comprise a negative plate side compliant member between said outer seal head and said inner seal head. The negative plate side compliant member may be configured to provide a flexible, air tight connection with said inner seal head and said outer seal head. The inner seal head may further comprise a bearing housing. The bearing housing may be radially and rotationally moveable within said body of said negative plate assembly due to said flexible, air tight connection provided by said negative plate side compliant member.

The air spring assembly may be suitable for use in a suspension inclusive device. Examples of a suspension inclusive device include, but are not limited to, a shock for a vehicle, an exoskeleton, a seat frame, a prosthetic, a suspended floor, a hood and/or trunk support for a vehicle, a door closer. In some embodiments when the air spring assembly is incorporated into a shock for a vehicle, the vehicle may be, but not limited to, a bicycle, an electric bike (e-bike), a hybrid bike, a scooter, a motorcycle, an automobile, ATV, UTV, snowmobile, power boat, a personal watercraft.

In some embodiments the bearing housing may further comprise a scraper seal. The bearing housing may further comprise a shaft bushing. The bearing housing may further comprise a shaft seal.

In some embodiments said piston assembly may further comprise a shaft flange coupled with said shaft. The least one piston side compliant member may be between said piston and said shaft flange. The piston assembly may further comprise at least a second piston side compliant member may be between said piston and said shaft flange. The piston base may be configured to couple with said piston and supportively enclose said shaft flange and both of said piston side compliant members therein, such that said shaft can move relative to said piston.

In some embodiments a diameter of said shaft flange may be smaller than a bore in said piston. The shaft flange may be configured to move radially and tilt within said piston bore.

In some embodiments the air spring assembly may further comprise a glide band located around an outer diameter of said piston. A height of said glide band may be configured to prevent said piston from rocking within an air chamber.

In some embodiments the air spring assembly may further comprise a top out assembly fixedly coupled with said shaft. The top out assembly may be configured to provide a top out load path that does not include said at least one piston side compliant member.

In some embodiments the negative plate side compliant member may comprise, or may be, a large diameter O-ring.

In some embodiments the shaft bushing and scraper seal may be configured to translate for a shaft deflection to reduce a normal force applied due to a change in an axial angle of said shaft.

According to some embodiments there is provided a suspension inclusive device comprising an air spring assembly as set out above, or as described or as claimed anywhere herein. Examples of a suspension inclusive device include, but are not limited to, a suspension for a vehicle, an exoskeleton, a seat frame, a prosthetic, a suspended floor, a hood and/or trunk support for a vehicle, a door closer. In some embodiments when the air spring assembly is incorporated into a suspension for a vehicle, the vehicle may be, but not limited to, a bicycle, an electric bike (e-bike), a hybrid bike, a scooter, a motorcycle, an automobile, ATV, UTV, snowmobile, power boat, a personal watercraft.

In some embodiments the suspension inclusive device comprises a suspension for a vehicle. The suspension may further comprise a damper.

According to some embodiments there is provided a vehicle comprising a suspension as set out above, or as described or as claimed anywhere herein. The vehicle may be an electric bike (e-bike), a hybrid bike, a scooter, a motorcycle, an automobile, ATV, UTV, snowmobile, power boat, or a personal watercraft.

According to some embodiments there is provided an air spring assembly. The air spring assembly may comprise a piston assembly configured in a telescoping arrangement with an air chamber. The piston assembly may be mounted to a shaft. The air spring assembly may comprise a negative plate assembly that permits movement of the shaft into and out of said air chamber. One or both of the negative plate assembly and the piston assembly may include at least one compliant member to provide an amount of give, motion, axial play, or the like to reduce the normal force applied due to a change in the axial angle of the shaft during movement into or out of the air chamber.

Throughout the description and claims of this specification, the words "comprise" and "contain" and variations of the words, for example "comprising" and "comprises", mean "including but not limited to", and do not exclude other components, integers or steps. Moreover the singular encompasses the plural unless the context otherwise requires: in particular, where the indefinite article is used, the specification is to be understood as contemplating plurality as well as singularity, unless the context requires otherwise.

Preferred features of each aspect of the invention may be as described in connection with any of the other aspects. Within the scope of this application it is expressly intended that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible.

### BRIEF DESCRIPTION OF THE DRAWINGS

Aspects of the present invention are illustrated by way of example, and not by way of limitation, in the accompanying drawings, wherein:
Figure 1A is a schematic view of a bicycle having an air spring assembly, in accordance with an embodiment.
Figure 1B is a perspective view of a front fork assembly with an air spring assembly, in accordance with one embodiment.
Figure 1C is a cross-sectional view of the front fork assembly with an air spring assembly, in accordance with one embodiment.
Figure 2A is a cross-sectional view of an air spring assembly with a negative plate assembly having a compliant member, in accordance with an embodiment.
Figure 2B is a cross-sectional view of an air spring assembly with a piston assembly having a compliant member, in accordance with an embodiment.
Figure 3A is a cross-sectional view of a negative plate assembly, in accordance with an embodiment.
Figure 3B is a perspective view of the negative plate assembly, in accordance with an embodiment.
Figure 3C is an exploded view of the negative plate assembly, in accordance with an embodiment.
Figure 4A is a cross-sectional view of a piston assembly, in accordance with an embodiment.
Figure 4B is a side perspective view of a piston body of the piston assembly of Figure 4A, in accordance with an embodiment.
Figure 4C is a side perspective view of a glide band of the piston assembly of Figure 4A, in accordance with an embodiment.
Figure 5A is a cross-sectional view of a piston assembly, in accordance with an embodiment.
Figure 5B is a cross-sectional view of the piston assembly, in accordance with an embodiment.
Figure 5C is an exploded view of the piston assembly, in accordance with an embodiment.

The drawings referred to in this description should be understood as not being drawn to scale except if specifically noted.

### DETAILED DESCRIPTION

The detailed description set forth below in connection with the appended drawings is intended as a description of various embodiments of the present invention and is not intended to represent the only embodiments in which the present invention is to be practiced. Each embodiment described in this disclosure is provided merely as an example or illustration of the present invention, and should not necessarily be construed as preferred or advantageous over other embodiments. In some instances, well known methods, procedures, and objects have not been described in detail as not to unnecessarily obscure aspects of the present disclosure.

In the following discussion, and for purposes of clarity, a bicycle is utilized as the example vehicle within which the air spring assembly is utilized. However, it should be appreciated that in another embodiment, the air spring assembly disclosed herein can be used with a number of different applications or systems that use one or more air spring assemblies. Applications include a vehicle such as, but not limited to, a bicycle, an electric bike (e-bike), a hybrid bike, a scooter, a motorcycle, an automobile, ATV, UTV, snowmobile, power boat, personal watercraft ('PWC'), etc.

Additional air spring assembly use cases include suspension inclusive device such as, but not limited to, an exoskeleton, a seat frame, a prosthetic, a suspended floor, a hood and/or trunk support for a vehicle, a door closer, and the like.

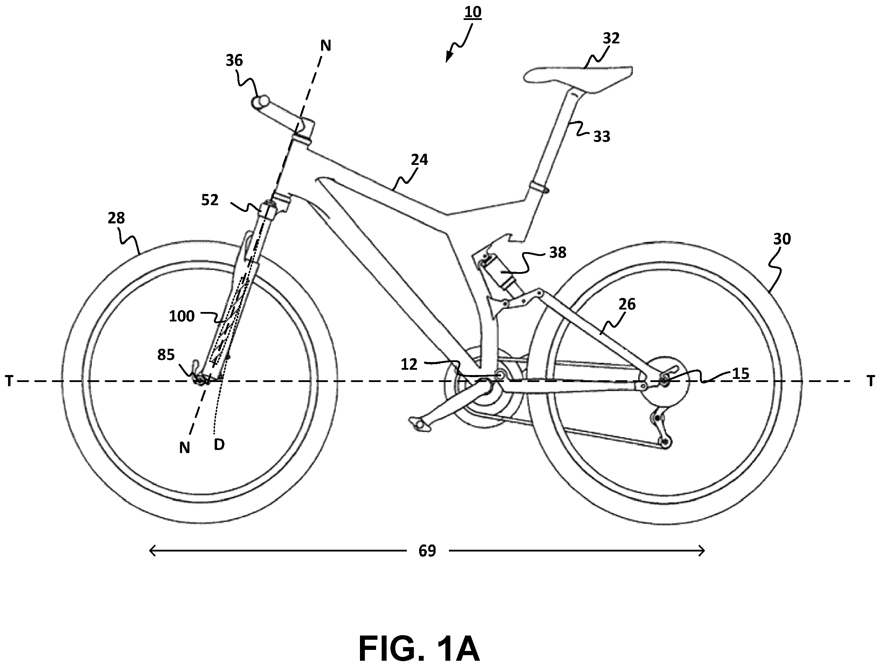

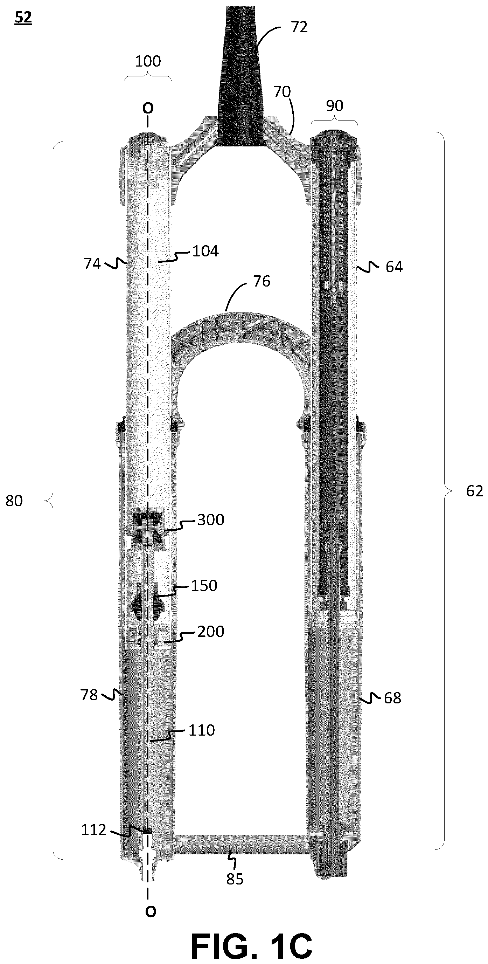

Referring now to Figure 1A, a schematic side view of a bicycle 10 having an air spring assembly 100 incorporated therewith is shown in accordance with an embodiment. In one embodiment, bicycle 10 has a main frame 24 with a suspension system comprising a swing arm 26 that, in use, is able to move relative to the rest of main frame 24; this movement is permitted by, inter alia, damper 38. The front fork assembly 52 also provide a suspension function via an air spring assembly 100 in one fork leg (and a shock assembly 90 in another leg as shown in Figure 1C), as such the bicycle 10 is a full suspension bicycle (such as an ATB or mountain bike).

However, the embodiments described herein are not limited to use on full suspension bicycles. In particular, the term "suspension system" is intended to include vehicles having front suspension only, rear suspension only, seat suspension only, a combination of two or more different suspension types, and the like.

In one embodiment, swing arm 26 is pivotally attached to the frame 24 at pivot point 12. Although pivot point 12 is shown in a specific location, it should be appreciated that pivot point 12 can be found at a different location. In a hard tail bicycle embodiment, there would be no pivot point 12. In one embodiment of a hardtail bicycle, main frame 24 and swing arm 26 would be formed as a fixed frame.

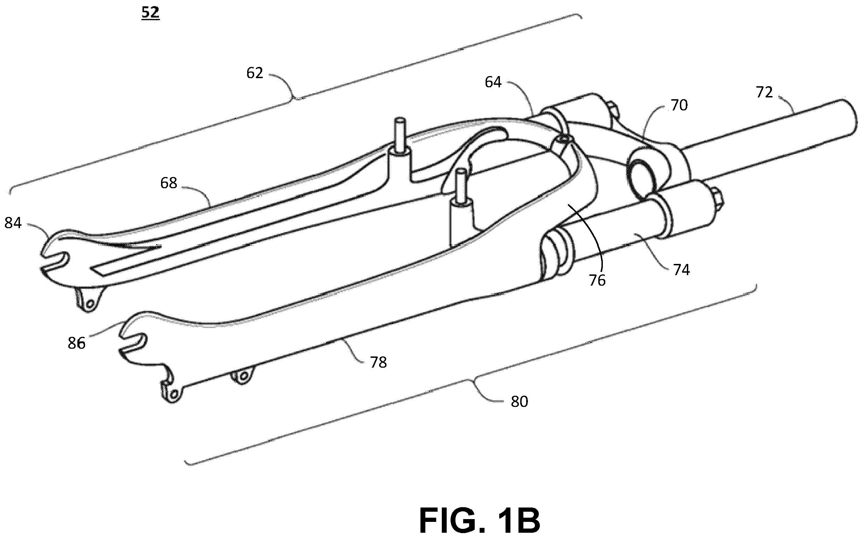

Bicycle 10 includes a front wheel 28 which is coupled with the front fork assembly 52 via axle 85. In one embodiment, a portion of front fork assembly 52 (e.g., a steerer tube 72 of Figure 1B) passes through the bicycle main frame 24 and couples with handlebars 36. In so doing, the front fork assembly 52 and handlebars 36 are rotationally coupled with the main frame 24 thereby allowing the rider to steer the bicycle 10.

Bicycle 10 includes a rear wheel 30 which is coupled to the swing arm 26 at rear axle 15, and a rear damping assembly (e.g., damper 38) is positioned between the swing arm 26 and the frame 24 to provide resistance to the pivoting motion of the swing arm 26 about pivot point 12. In one embodiment, a saddle 32 is connected to the main frame 24 via a seatpost 33. In one embodiment, seatpost 33 is a dropper seatpost.

In one embodiment, one or more of air spring assembly 100, (shock assembly 90 of Figure 1C), damper 38, seatpost 33, handlebars 36, and/or the like include one or more active damping components. In one embodiment, one or more sensors and valve actuators (e.g. electric solenoid or linear motor type-note that a rotary motor may also be used with a rotary actuated valve), suspension components, suspension component controller(s) and/or data processing system(s), and the like may be coupled to and/or integrated with the vehicle structure, such as disclosed in U.S. Pat. Nos. 7,484,603; 8,838,335; 8,955,653; 9,303,712; 10,036,443; 10,060,499; 10,443,671; and 10,737,546; to each of which reference is made. Further, sensors and valves, or principles, of patents and other documents to reference is made herein, may be integrated one or more embodiments hereof, individually or in combination.

For purposes of the following discussion, longitudinal direction 69 is the direction of the forward end to the rear end of the bicycle 10. A ground plane refers to the plane that is formed by the terrain across which the vehicle is traveling. The ground plane would encompass the line formed by longitudinal direction 69. In an upright position, bicycle 10 would be perpendicular (or substantially perpendicular) to the ground plane.

Plane T-T is parallel to (or substantially parallel to) the ground plane and contains the axis of rotation of front wheel 28 and rear wheel 30.

Axis N-N illustrates the central axis of fork assembly 52 when there are no bending forces being applied to axle 85 (e.g., the axis of rotation of front wheel 28) that would cause any type of deflection of the axle 85 of fork assembly 52 (e.g., one or both of left leg 80 and right leg 62) in plane T-T.

Dotted curve D illustrates a flex or deflection of central axis of fork assembly 52 due to an off axis N-N force being applied to fork assembly 52. Basically, since the upper portion of fork assembly 52 is fixed with the frame 24 (due to the steerer tube 72 passing therethrough) it is the lower portion of fork assembly 52 that will deflect.

For example, when the front wheel 28 impacts an object, the impact force is transferred to axle 85. The transferred impact force will cause the fork assembly 52 (and the air spring assembly 100 therein) to contract telescopically which will absorb some or all of the impact force.

However, for each impact, there will be an impact force vector in the direction of axis N-N and an impact force vector in the direction other than axis N-N (or off axis N-N). The impact force vector in the direction off axis N-N, will cause the flex in the fork assembly 52. For example, if the front wheel 28 impacts a flat face of a rock, the impact force will cause the fork assembly 52 to flex which will change the shape of the fork assembly 52 from the linear axis N-N to a curved shape similar to dotted curve D. Although one impact force deflection is shown, it should be appreciated that the impact force could deflect the fork assembly in almost any direction of plane T-T.

Although a number of components are shown in the disclosed figures, it should be appreciated that one or more of the components of bicycle 10 and/or air spring assembly 100 could be fixed or could be interchangeable. Further, one or more of the components could be adjusted, modified, removed, added, or exchanged for personal reasons, for performance reasons, for different applications (e.g., road, downhill, offroad, uphill, etc.), for different vehicles, and the like.

Referring now to Figure 1B, a perspective view of a front fork assembly 52 with an air spring assembly 100 is shown in accordance with one embodiment. Figure 1C is a rear cross-sectional view of the front fork assembly 52 with an air spring assembly 100, in accordance with one embodiment.

With reference now to Figures 1B and 1C, the front fork assembly 52 include right and left legs, 62 and 80, respectively, as referenced by a person in a riding position on the bicycle 10. The right leg 62 includes a right upper tube 64 telescopingly received in a right lower tube 68. Similarly, the left leg 80 includes a left upper tube 74 telescopingly received in a left lower tube 78.

In one embodiment, the telescoping of the legs is inverted. That is, the right lower tube 68 of right leg 62 is telescopingly received in the right upper tube 64. Similarly, the left lower tube 78 of left leg 80 is telescopingly received in the left upper tube 74.

A crown 70 connects the right upper tube 64 to the left upper tube 74 thereby connecting the right leg 62 to the left leg 80 of the front fork assembly 52. In addition, the crown 70 supports a steerer tube 72, which passes through, and is rotatably supported by, the frame 24 of the bicycle 10. The steerer tube 72 provides a means for connection of the handlebars 36 to the front fork assembly 52.

Each of the right lower tube 68 and the left lower tube 78 includes dropouts 84 and 86, respectively, for connecting the front wheel 28 to the front fork assembly 52 via a front axle 85. An arch 76 connects the right lower tube 68 and the left lower tube 78 to provide strength and minimize twisting thereof.

As shown in the cross-sectional view Figure 1C, the front fork assembly 52 includes an air spring assembly 100 within left leg 80 and a shock assembly 90 within right leg 62. Air spring assembly 100 includes an air chamber 104, a piston assembly 300, a negative plate assembly 200, and a shaft 110.

In one embodiment, air spring assembly 100 spans the entire length of left leg 80. For example, the air chamber 104 will be located within left upper tube 74 top such that the top of the air chamber 104 will be located proximal to crown 70 while the bottom end of shaft 110 will be coupled with base lug 112 proximal to the bottom of left lower tube 78. Further, the shaft 110 will extend from the base lug 112, into the air chamber 104 via the negative plate assembly 200, such that the top end of shaft 110 is coupled with the piston assembly 300 (located with air chamber 104).

With reference now to Figures 1A and 1C, when fork assembly 52 is in its normal position, the telescopic operation of the shaft 110 of air spring assembly 100 is linear as illustrated by axis N-N (of Figure 1A) and axis O-O of Figure 1C.

However, as discussed herein, during operation of the bicycle 50, front wheel 28 impacts with an object, there will usually be at least a component of the impact force that is off axis N-N and/or O-O which will cause the fork assembly 52 to flex and no longer be a straight line from crown 70 to axle 85. Instead, for at least a moment, the shape of the fork assembly 52 will be curved.

As the fork assembly 52 deflects, the lower end of shaft 110 (which is coupled with base lug 112 proximal to the bottom of left lower tube 78) will follow the deflection. Since the deflection is a curve along the length of fork assembly 52 as shown by curve D, the deflection of the lower end of shaft 110 will be greater than the deflection of the piston assembly 300 (and thus the top end of shaft 110). As such, the axial angle of the shaft 110 will change with respect to the axial motion of piston assembly 300 to which its other end is coupled. In prior systems, this change in the axial angle of shaft 110 would put a high normal force on the two dynamic bearing surfaces: one at the negative plate assembly 200 (e.g., seal head, base plate, etc.) and one at the piston assembly 300 resulting in high friction forces that add resistance to the telescopic motion of the air spring assembly 100.

However, embodiments herein provide the air spring assembly 100 where one or both of negative plate assembly 200 and the piston assembly 300 include at least one compliant member to provide an amount of give, motion, axial play, or the like to reduce the normal force applied due to the change in the axial angle of the bottom deflected shaft 110. Since the normal force applied are reduced, the increase in friction forces that add resistance to the telescopic motion of the air spring assembly 100 are similarly reduced.

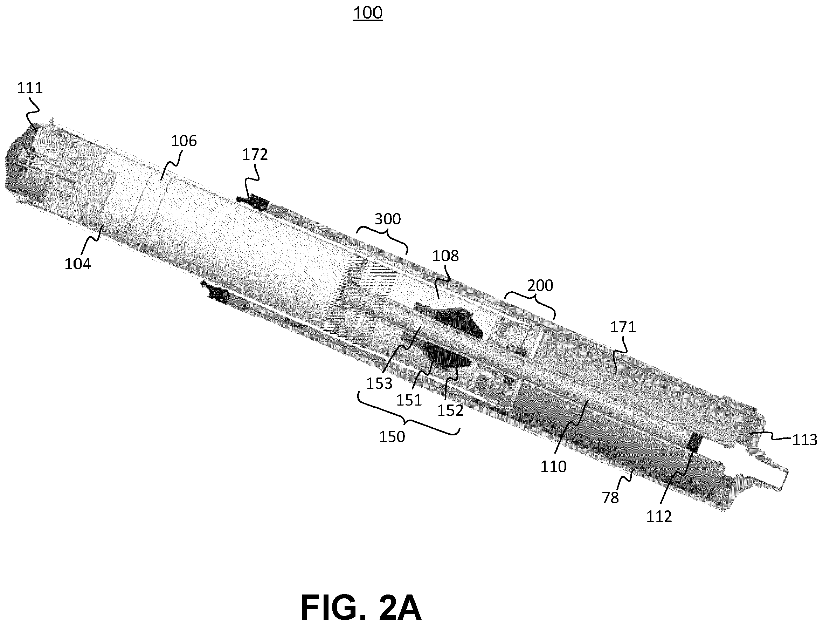

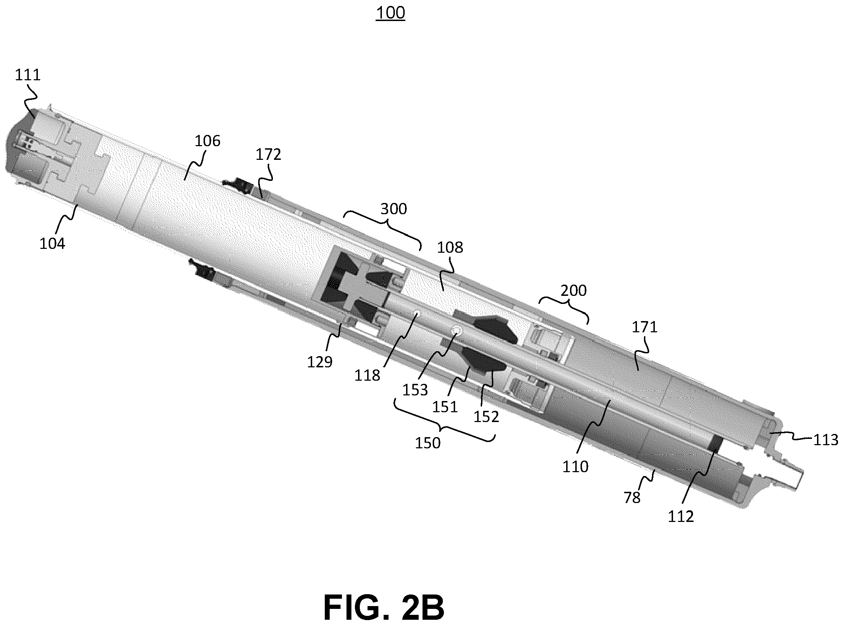

With reference now to Figure 2A, a cross-sectional view of an air spring assembly 100 with a negative plate assembly 200 having a compliant member, in accordance with an embodiment. Figure 2B is a cross-sectional view of an air spring assembly 100 with a piston assembly 300 having a compliant member, in accordance with an embodiment.

With reference now to Figures 2A and 2B, air spring assembly 100 includes a top cap 111, a left lower tube 78, an air chamber 104, a piston assembly 300, a negative plate assembly 200, and a shaft 110.

In one embodiment, shaft 110 is hollow and includes a port 118 therein to allow air to be added from a valve in the bottom cap 113 into the air chamber 104.

In one embodiment, the air chamber 104 is an integral part of the fork assembly 52, e.g., it utilizes the left upper tube 74. In general, the left upper tube 74 is used to provide the side walls, the top cap 111 is installed at the top of the left upper tube 74 to provide an air tight seal, and the negative plate assembly 200 is installed at the bottom of the left upper tube 74 and provides an air tight seal. In so doing, the left upper tube 74 is the air chamber 104.

When the left upper tube 74 is the air chamber 104, piston assembly 300 will seal with the ID of the left upper tube 74 and the negative plate assembly 200 will provide an airtight pathway for shaft 110 to move into and out of the left upper tube 74.

In another embodiment, a cartridge air spring is used to form the air chamber 104. In general, a cartridge air spring is completely separable from the left upper tube 74. In other words, it can be removed from the left upper tube 74 and it would still be a working air spring assembly 100. In one embodiment, the cartridge air spring is coaxial and will thread into the left upper tube 74. Thus, the cartridge air spring would have an outer diameter that is smaller than the ID of the left upper tube 74. In one embodiment, the cartridge air spring will also include top cap 111, piston assembly 300, top cap assembly 150, and negative plate assembly 200.

In one embodiment, the air spring assembly 100 also includes a lower leg gas volume (or open volume 171) within a chamber in left lower tube 78 defined at the top by gas seal 172 and at the bottom by bottom cap 113. In general, the gas seal 172 (goes to atmosphere) provides an air seal about the exterior of left upper tube 74 close to the top of left lower tube 78.

### Top out

When piston assembly 300 is installed within air chamber 104, it will functionally divide air chamber 104 into a positive chamber 106 and a negative chamber 108. In general, the positive chamber 106 includes the area from the top cap 111 to the gas seal of piston assembly 300. The negative chamber 108 includes the space below the gas seal of piston assembly 300 down to negative plate assembly 200.

In one embodiment, the air within positive chamber 106 and negative chamber 108 are able to communicate (or equalize) at the designed point of equilibrium, e.g., a transfer port 129. For example, when a seal (such as a quad seal, O-ring, or the like) of the piston assembly 300 is within the transfer port 129, the seal is no longer blocking airflow around the piston assembly 300. At that position, the positive chamber 106 and negative chamber 108 will be fluidly coupled and will equalize to the same pressure.

Once the air spring assembly 100 is installed in a vehicle, and the weight of the sprung portion of the vehicle is applied to the shaft 110, the piston assembly 300 will move further into the positive chamber 106. As the piston assembly 300 moves further into positive chamber 106, the pressure in positive chamber 106 will continue to increase while the pressure in the negative chamber 108 will continue to decrease. This pressure change will continue until the pressure being applied to the bottom of the shaft 110 (e.g., by the weight of the sprung portion of the vehicle) is balanced by the pressure on the piston assembly 300 within the air chamber 104.

The pressure on the piston assembly 300 occurs as a combination of the push against the piston assembly 300 due to the increased pressure in the positive chamber 106 in conjunction with the pulling one the piston assembly 300 due to the decreased pressure in the negative chamber 108. Thus, at sag, the air spring assembly 100 will have a higher pressure in the positive chamber 106 and a lower pressure in the negative chamber 108.

During operation, as the air spring assembly 100 encounters a compression event (as discussed herein), the shaft 110 will push piston assembly 300 toward the top of the air chamber 104 (e.g., toward top cap 111) once again causing an increase in the pressure within the positive chamber 106 and decreasing the pressure in the negative chamber 108. Once again, after the compression event, the higher air pressure in positive chamber 106 will push (and the lower pressure in the negative chamber 108 will pull) the piston assembly 300 back toward the point of equilibrium (e.g., when the quad seal of the piston assembly 300 is within the transfer port 129).

When the air spring assembly 100 encounters a top-out event, e.g., a jump, wheelie, hop, etc., the weight of the unsprung mass (e.g., left lower tube 78, right lower tube 68, axle 85, and front wheel 28) will pull the piston assembly 300 into the negative chamber 108. If the increased pressure in the negative chamber 108 cannot match the force of the unsprung mass, the shaft 110 will continue to pull the piston assembly 300 further into the negative chamber 108 until the top out assembly 150 makes contact with negative plate assembly 200 and stops any further movement of the shaft 110.

In one embodiment, top out assembly 150 includes a top out feature 151 (e.g., a retaining hat, etc.), a compliant member 152 (e.g., an elastomer, negative coil spring, or the like), and fastener 153 (e.g., a roll pin, spring pin, or the like). Fastener 153 will fixedly couple the top out feature 151 with the shaft 110 at a fixed location and top out feature 151 will retain the compliant member 152.

In one embodiment, the compliant member 152 will extend below the lowest point of top out feature 151 such that when a top out occurs, the compliant member 152 will impact/make contact with the negative plate assembly 200 and spread out and/or reach a maximum compressibility (thereby stopping further top-out motion of the shaft 110) before the top out features 151 is able to reach the negative plate assembly 200.

In one embodiment, the top out assembly 150 is located about (but not pinned to) shaft 110. Instead, the top out assembly 150 will be compressed against the negative plate assembly 200 by the bottom of the piston assembly 300 pushing against the top out feature 151.

### Negative plate assembly

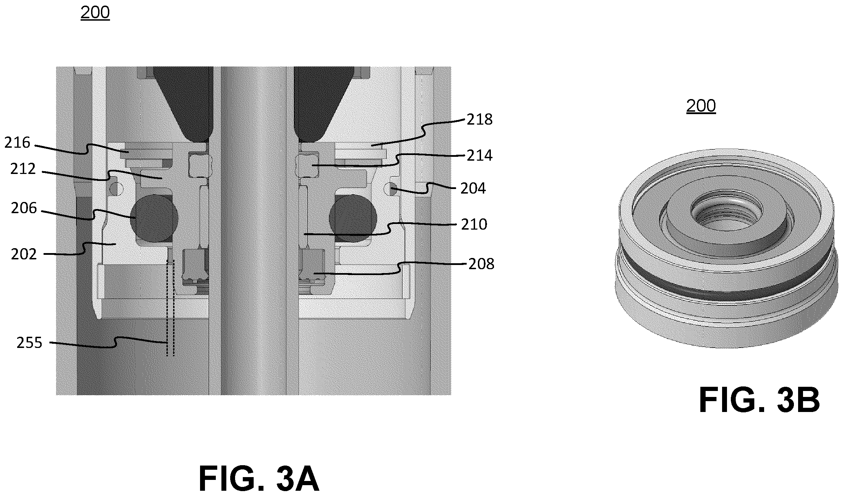

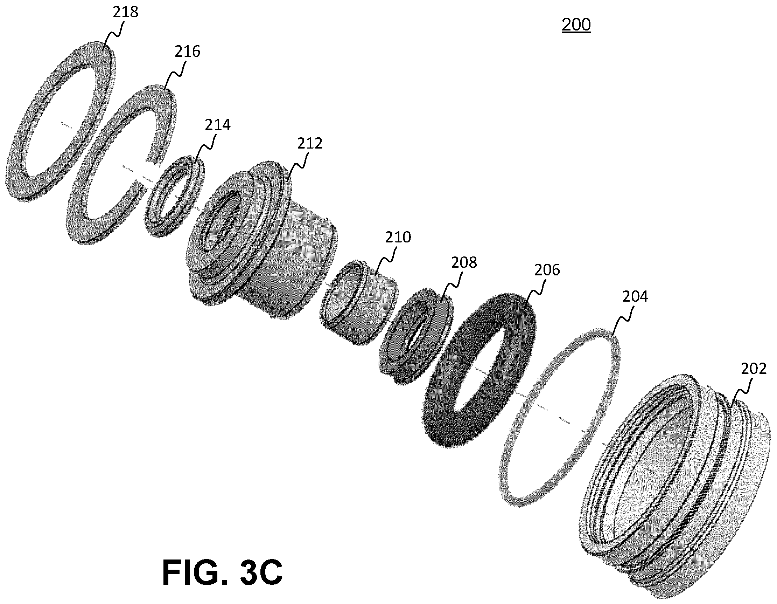

With reference now to Figure 3A, a cross-sectional view of a negative plate assembly 200 portion of air spring assembly 100 is shown in accordance with an embodiment. Figure 3B is a perspective view of the negative plate assembly 200 portion of air spring assembly 100 in accordance with an embodiment. Figure 3C is an exploded view of the negative plate assembly 200 portion of the air spring assembly 100 in accordance with an embodiment.

In general operation, the negative plate assembly 200 separates the air of open volume 171 of the left lower tube 78 from the positive chamber 106 and a negative chamber 108 of air chamber 104. In addition, the negative plate assembly 200 provides a fluid seal for shaft 110.

With reference now to Figures 3A-3C, negative plate assembly 200 is novel as it utilizes a two-piece body and at least one compliant member therebetween to provide previously unavailable degrees of freedom to the negative plate assembly 200. Moreover, the compliant member provides space within the two piece housing to allow radial and rotational movement of a bearing housing that holds, in one embodiment, the bushing and seals. This movement allows the shaft 110 to achieve a lower strain state when the fork assembly 52 deflects under load.

In one embodiment, negative plate assembly 200 includes an outer seal head 202, an O-ring 204, compliant member 206, scraper seal 208, shaft bushing 210, inner seal head 212, shaft seal 214, retaining ring 216, and cover plate 218. In various embodiments, inner seal head 212 includes a bearing housing comprised of scraper seal 208, shaft bushing 210, and shaft seal 214. In various other embodiments, inner seal head 212 includes a bearing housing comprising at least one of: scraper seal 208, shaft bushing 210, and shaft seal 214. The bearing housing has radial and rotational movement within the body of negative plate assembly 200 due to a flexible, air tight connection provided by compliant member 206.

In one embodiment, O-ring 204 (or another seal type) will seal the outer seal head 202 with the ID of the wall of air chamber 104. In one embodiment, shaft seal 214 is a quad seal. In one embodiment, shaft seal 214 is another seal type such as an O-ring, or the like.

In one embodiment, compliant member 206 is a large diameter O-ring. In another embodiment, compliant member 206 could be another compliance material (e.g., a shape remembering rubbery material) such as a co-molded seal, an elastomer, nitrile rubber (e.g., nitrile butadiene rubber (NBR)), or the like), a spring, an elastic substance, a viscoelastic substance, a rubbery material, or the like.

Once negative plate assembly 200 is assembled (as shown in Figures 3A and 3B), retaining ring 216 will fit into a retaining ring groove of the outer seal head 202 and hold the negative plate assembly 200 together.

By providing a compliant member 206 therebetween the inner seal head 212 will be flexibly coupled with outer seal head 202 with a radial gap 255. Moreover, the flexibility provided by the compliant member 206 will allow a bit of axial play to occur between the inner seal head 212 and the outer seal head 202 using the radial gap 255 without deleteriously affecting the air seal being provided by negative plate assembly 200. In one embodiment, the bit of axial play allows the shaft bushing 210 and scraper seal 208 to translate radially and/or rotationally (pitch/yaw) within the negative plate assembly 200. As such, the shaft bushing 210 and scraper seal 208 are able to translate as the fork assembly 52 and air spring shaft 110 deflect under riding loads. This translational capability (e.g., give, motion, axial play, or the like) will reduce the normal force applied due to a change in the axial angle of a deflected shaft 110. Friction forces that would add resistance to the telescopic motion of the air spring assembly 100 are similarly reduced and/or resolved.

Therefore, as the fork assembly 52 is subjected to the different bending and flexing loads (as the bicycle 50 is being ridden), and the bottom end of the shaft 110 is subject to those loads as discussed herein. The shaft 110 will incur some lateral movement. However, instead of encountering a rigid feature at the entrance to the air chamber 104, the shaft 110 will encounter the negative plate assembly 200 having an amount of axial play or flex (including in the shaft bushing 210 and scraper seal 208) that will allow the shaft 110 to move therethrough (and with some amount of lateral movement) without binding, and while incurring a reduced and/or resolved increase in friction forces that would otherwise add resistance to the telescopic motion of the air spring assembly 100.

### Piston assembly

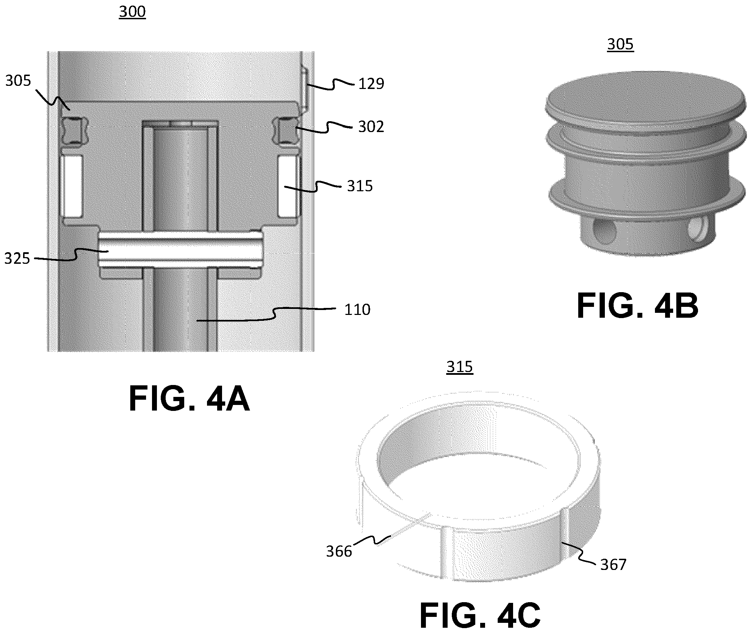

With reference now to Figure 4A, a cross-sectional view of a piston assembly 300 is shown in accordance with an embodiment. In one embodiment, piston assembly 300 includes piston 305, at least one compliant member (e.g., glide band 315), fastener 325, and seal 302. In one embodiment, seal 302 is a quad seal. In another embodiment, seal 302 is an O-ring, a co-molded seal, or the like.

In one embodiment, fastener 325 is a roll pin. In another embodiment, fastener 325 is another fastener type such as a spring pin, or the like. In general, fastener 325 will fixedly couple the piston 305 with the shaft 110.

With respect to Figure 4B, a side perspective view of the piston 305 of the piston assembly 300 of Figure 4A is shown in accordance with an embodiment. In one embodiment, piston 305 is aluminum. In another embodiment, piston 305 is another material such as a different metal, a composite, or the like.

Referring now to Figures 4A and 4B, in one embodiment, piston 305 has a greater overlap with air spring shaft 110 to increase strength/stiffness and reduce rocking while allowing axial movement along the air chamber 104.

With reference now to Figure 4C, a side perspective view of the glide band 315 of the piston assembly 300 of Figure 4A is shown in accordance with an embodiment. In one embodiment, the glide band 315 (or bearing surface) is Polytetrafluoroethylene (PTFE). In another embodiment, the glide band 315 is another type of lower friction coefficient material or includes a lower friction coating such as aluminum magnesium boride (e.g., BAM) or the like.

Glide band 315 includes one or more grooves 367 in the OD (or ports through the glide band 315, etc.) to help with negative air transfer (e.g., pressure equalization) by ensuring there is a flow path around the glide band 315 and stopping the glide band from acting as an air seal when it is installed on the piston 305. In one embodiment, glide band 315 includes a split 366 for installation of the glide band 315 about piston 305.

Referring now to Figures 4A-4C, in one embodiment, glide band 315 is added to the OD of the piston 305 to add stabilization during movement of the piston 305 while also allowing some radial compliance. In addition, the glide band 315 will decrease the breakaway and running (or sliding) friction of the piston 305.

In one embodiment, the addition of the glide band 315 will increase the overall height of piston 305 allowing the piston 305 and glide band 315 combination to have a greater overlap with air spring shaft 110. In one embodiment, a larger overlap will increase strength and/or stiffness and reduce rocking while allowing axial movement along the air chamber 104.

The height of the glide band 315 is designed to prevent rocking of the piston 305 in the air chamber 104. For example, a given axis and a given radial distance is used to determine the minimum height of the glide band 315 required to achieve the best rocking prevention. Where a shorter height would not provide as much rocking prevention and a greater height would not increase the rocking prevention. Thus, providing the glide band 315 with a properly designed height will both maximize any rocking reduction while also minimizing the addition of dead space to the air spring assembly 100.

In one embodiment, the glide band will help spread and maintain lubrication around the surface of the chamber wall.

Seal 302 is coupled with the piston 305 to provide an airtight seal between the piston 305 and the wall of air chamber 104. At least one dimple (e.g., transfer port 129) is formed in the wall of the air chamber 104 and the width of the transfer port 129 will be slightly bigger than the width of the seal 302. As discussed herein, the transfer port 129 is used to provide a controlled leak. That is, as seal 302 passes the transfer port 129, there will be a point when the seal 302 is completely within the transfer port 129. At that point, the air seal, between the piston 305 and wall of air chamber 104, provided by seal 302 will open to allow an amount of air to pass around the piston 305. In one embodiment, this controlled leak is used to address negative air transfer issues that can occur within an air spring assembly.

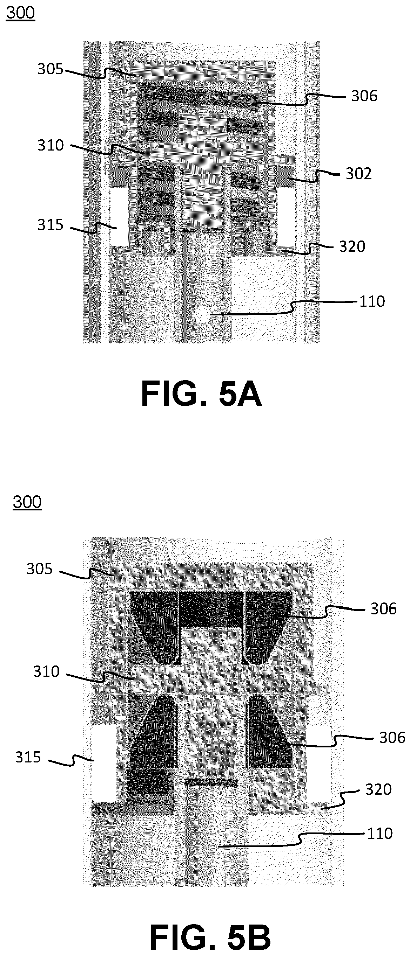

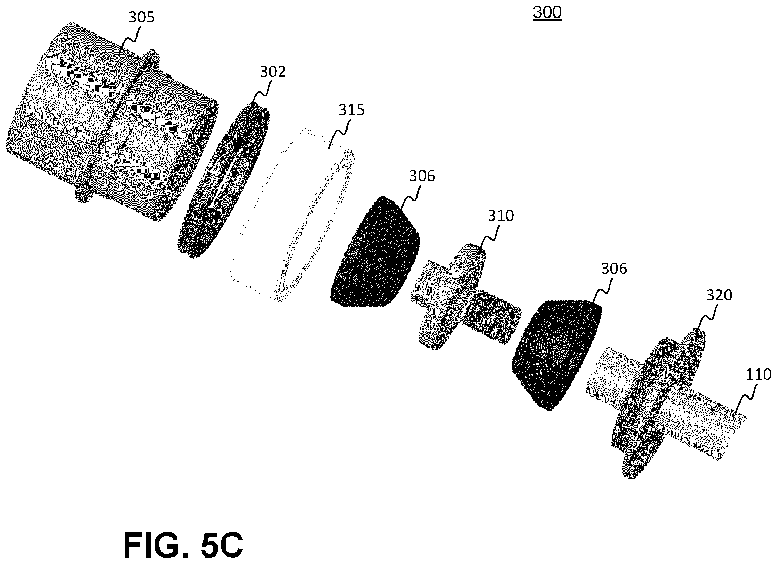

Referring now to Figure 5A, a cross-sectional view of a piston assembly 300 is shown in accordance with an embodiment. Figure 5B is a cross-sectional view of the piston assembly 300 shown in accordance with an embodiment. Figure 5C is an exploded view of the piston assembly 300 shown in accordance with an embodiment.

With reference now to Figures 5A-5C, in one embodiment, piston assembly 300 includes piston 305, at least one compliant member 306, shaft flange 310, piston base 320, and quad seal 302 (or an O-ring, a co-molded seal, or the like). In one embodiment, piston assembly 300 includes an optional glide band 315. In one embodiment, piston assembly 300 does not include the optional glide band 315.

With respect to Figure 5A, the compliant member 306 is a spring. In Figure 5B, the compliance member 306 is an elastomer. In one embodiment, compliant member 306 could be a compliance material (e.g., a shape remembering rubbery material) such as a co-molded seal, an elastomer, nitrile rubber (e.g., NBR, or the like), a spring, an elastic substance, a viscoelastic substance, a rubbery material, or the like.

Referring again to Figures 5A-5C, at least one compliant member 306 is added between the shaft 110 and the piston body (e.g., the piston 305 coupled with piston base 320). By adding at least one compliant member 306 between the shaft 110 and the piston 305, the shaft 110 can move relative to the piston 305. This puts the shaft 110 in a lower strain state and reduces the normal forces acting on the dynamic bearing surfaces when the fork assembly 52 deflects under load. A reduction in normal forces reduces the friction force that is resisting telescopic motion of the fork assembly 52.

It is advantageous to have the at least one compliant member 306 between the shaft 110 and piston 305 because when the fork assembly 52 is near its sag point (where it spends most of its time) the length of shaft 110 between negative plate assembly 200 and piston 305 is much shorter than the length of shaft 110 between negative plate assembly 200 and base lug 112. Therefore, small relative motion between shaft 110 and piston 305 can compensate for large fork assembly 52 deflections.

In one embodiment, to create compliance between the shaft 110 and piston 305 the two parts are connected by capturing a shaft flange 310 on the shaft 110 between at least two compliant members 306 housed inside the piston body. The diameter of the shaft flange 310 is smaller than the bore in the piston 305 that houses it. This difference in diameters allows the shaft flange 310 to move radially and tilt within the piston body - both degrees of freedom allow the shaft 110 to maintain a lower strain state as the fork assembly 52 deflects, thus reducing the normal forces acting on the bearing surfaces. In one embodiment, at least one compliant member 306 is located above the shaft flange 310 and at least one compliant member 306 is located below the shaft flange 310. The compliant members 306 are preloaded and help maintain a constant load-carrying contact between the piston 305 and shaft flange 310. This constant contact ensures no free play exists between the shaft 110 and the piston 305 that could be felt by the user. In other embodiments, there may be one, three, or even more compliant members 306 housed inside the piston body. In one embodiment, the compliant members 306 may have various different shapes. For example, in one embodiment, the compliant members 306 may have a plurality of fingers, or the like to support and retain the position of the shaft flange 310.

In one embodiment, a separate top out load path is utilized to maintain proper axle-to-crown height of the fork assembly 52. The separate top out load path allows the compliant members 306 in the piston assembly 300 to be sized and preloaded for optimum performance resulting in lowest possible strain in shaft 110 as fork assembly 52 undergoes deflections, without affecting the vehicle geometry.

For example, axle-to-crown height is important to the geometry of a bike, and therefore how the bike rides. In one embodiment, the compliant member 306 of the piston assembly 300 and the compliant member 152 of the top out assembly 150 will have a lot of squeeze (or flex, compressibility, etc.) especially when the both of the compliant members are acting together. This the range of the flex is larger than the operational tolerances for the axle-to-crown height it will detrimentally impact the bicycle performance.

In one embodiment, by fixing the top out assembly 150 with shaft 110, any flex of the compliant member 306 about the piston/shaft interface are removed from the top out flow path. For example, when the air spring assembly 100 tops out, only the compliant member 152 (which will compress/flex as it pushes against negative plate assembly 200) is involved in stopping any further top out motion of shaft 110. As such, it will be the only point of compliant member 152 induced fluctuation as any fluctuation occurring above the top out assembly 150 (such as by compliant member 306 at piston assembly 300) will be irrelevant to the maximum length of the top-out circuit. As such, the max flex of compliant member 152 will fall within the operational tolerances of the axle-to-crown height of air spring assembly 100, and vehicle performance will not be deleteriously affected.

The foregoing Description of Embodiments is not intended to be exhaustive or to limit the embodiments to the precise form described. Instead, example embodiments in this Description of Embodiments have been presented in order to enable persons of skill in the art to make and use embodiments of the described subject matter. Moreover, various embodiments have been described in various combinations. However, any two or more embodiments could be combined. Although some embodiments have been described in a language specific to structural features and/or methodological acts, it is to be understood that the subject matter defined in the appended claims is not necessarily limited to the specific features or acts described above. Rather, the specific features and acts described above are disclosed by way of illustration and as example forms of implementing the claims and their equivalents.

## Claims

1. A piston assembly comprising:
a piston;
at least one first compliant member;
a seal configured to provide an air tight seal between said piston and a wall of an air chamber; and
a fastener configured to couple said piston with a shaft.

2. A piston assembly as claimed in Claim 1, wherein said piston comprises an extended body length to increase an overlap of said shaft.

3. A piston assembly as claimed in Claim 1 or 2, wherein said piston comprises aluminium.

4. A piston assembly as claimed in Claim 1, 2 or 3, wherein said seal comprises a quad seal.

5. A piston assembly as claimed in Claim 1, 2, 3, or 4, wherein said at least one first compliant member comprises a glide band located around an outer diameter of said piston, and optionally wherein said glide band comprises a low friction coefficient material, such as Polytetrafluoroethylene (PTFE), or includes a low friction coating such as aluminum magnesium boride.

6. A piston assembly as claimed in Claim 5, wherein said glide band comprises at least one groove, said at least one groove configured to allow airflow around said glide band.

7. A piston assembly as claimed in Claim 5 or 6, wherein said glide band comprises a split, said split configured for use in an installation of said glide band around said outer diameter of said piston.

8. A piston assembly as claimed in Claim 5, 6 or 7, wherein a height of said glide band is configured to inhibit said piston from rocking within said air chamber.

9. A piston assembly as claimed in any preceding Claim, further comprising:
at least one second compliant member between said piston and a shaft, said at least one second compliant member optionally comprising a spring and/or an elastomer; and
a piston base, said piston base configured to couple with said piston and supportively enclose said shaft and said at least one second compliant member therein, such that said shaft can move relative to said piston.

10. The piston assembly of Claim 9, wherein said at least one second compliant member comprises a first side compliant member and a second side compliant member, the piston assembly further comprising:
a shaft flange coupled with a shaft;
said first side compliant member between said piston and said shaft flange on a first side thereof;
said second side compliant member between said piston and said shaft flange on a second side thereof, said second side opposite said first side; and
said piston base configured to couple with said piston and supportively enclose said shaft flange and said first and second side compliant members therein, such that said shaft can move relative to said piston.

11. A piston assembly as claimed in Claim 10, wherein a diameter of said shaft flange is smaller than a bore in said piston, said shaft flange configured to move radially and tilt within said piston bore.

12. A piston assembly as claimed in Claim 9, 10 or 11, further comprising:
a top out assembly fixedly coupled with said shaft, said top out assembly configured to provide a top out load path that does not include said first side compliant member and said second side compliant member.

13. An air spring assembly comprising a piston assembly as claimed in any preceding Claim.

14. An air spring assembly as claimed in Claim 13, further comprising a negative plate assembly comprising:
an outer seal head;
an inner seal head configured to couple with said outer seal head to form a body of said negative plate assembly;
at least one third compliant member between said outer seal head and said inner seal head configured to provide a flexible, air tight connection with said inner seal head and said outer seal head, optionally said at least one third compliant member comprising a O-ring and/or an elastomer; and
said inner seal head further comprising:
a bearing housing, said bearing housing having radial and rotational movement within said body of said negative plate assembly due to said flexible, air tight connection provided by said at least one third compliant member.

15. An air spring assembly as claimed in Claim 14, wherein said bearing housing further comprises:
a scraper seal;
a shaft bushing; and
a shaft seal;
and optionally wherein said shaft bushing and scraper seal are configured to translate during a shaft deflection to reduce a normal force applied due to a change in an axial angle of said shaft relative to said negative plate assembly.
